# EUROPEAN PATENT SPECIFICATION

(11) **EP 2 806 734 B1**
(45) Date of publication and mention of the grant of the patent: **27.02.2019**
(21) Application number: 12860056.6
(22) Date of filing: 21.12.2012
(51) Int. Cl.: A01K 13/00, B26B 19/28, B26B 19/24

(54) **AN IMPROVED DRIVE MECHANISM FOR A PORTABLE POWER TOOL**
VERBESSERTER ANTRIEBSMECHANISMUS FÜR EIN TRAGBARES ELEKTROWERKZEUG
MÉCANISME AMÉLIORÉ DE TRANSMISSION POUR OUTIL MOTORISÉ PORTATIF

(30) Priority: 23.12.2011 NZ 59738211
(43) Date of publication of application: 03.12.2014
(73) Proprietor: Shoof International Limited, Hamilton 3204 (NZ)
(72) Inventor: GRIFFITHS, Peter Murray, Hamilton 3204 (NZ)
(74) Representative: Evens, Paul Jonathan
(86) International application number: PCT/NZ2012/000244
(87) International publication number: WO 2013/095165

(56) References cited:
- WO-A1-2010/085157
- WO-A1-2010/085157
- DE-A1- 2 508 784
- DE-U1- 9 419 805
- US-A- 1 690 801
- US-A- 5 768 933
- US-A1- 2005 060 893
- US-A1- 2005 060 893

## Description

### TECHNICAL FIELD

This invention relates to an improved drive mechanism for a portable power tool. The present invention has particular application to the driving mechanism for a cutting device suitable for trimming animal hair from appendages such as animal tails.

However, it should be appreciated that the present invention can be readily applied to other applications.

### BACKGROUND ART

Persons working with farm animals, for example cows, will appreciate that the hair and fur of such animals quickly becomes mattered with mud and faecal matter.

For cows, the tail is an obvious source of bacteria which could subsequently cause mastitis in the cow. Mastitis is a particularly undesirable bacterial infection which affects the quality of milk produced by the cow.

It is commonly believed in the dairy industry that the instance of mastitis in cows can be reduced somewhat through either tail trimming or docking. This reduces the available surface area on which dirt and detritus may collect.

The docking of cow tails is not always desirable due to the extra time and energy required to attend to this task. This is particularly true when the cow is part of a large herd of animals.

It has also been recognised that it is desirable for the comfort of a cow for it to be able to use its tail to swat away flies and the like, and this is another reason for a move away from tail docking in the husbandry of cows.

Furthermore, docking of animal tails is no longer widely practiced in New Zealand, and many other countries, due to animal welfare issues.

However, this does mean that as noted above, the tail of a cow can become matted with mud, faecal matter and other types of dirt and detritus. When the tail contacts the udder, this transmits potentially mastitis causing bacteria.

A dirty and matted tail can also be undesirable for reasons other than an increased risk of mastitis.

For example, when the cow is in a dairy shed being milked, the operator of the milking equipment, who is usually positioned in a trench behind a row of milking stalls, can be hit in the face with a tail as he or she is attempting to put (or remove) the milking cup apparatus on the teats of the cow. This can be particularly unpleasant when the tail is covered with faecal matter and urine.

For these reasons, tail trimming is a common practice in the dairy industry. This is usually achieved with a pair of scissors or electric clippers. It is usually convenient to attend to the tail trimming when the cow is in a diary stall.

However, tail trimming using scissors or clippers can be particularly labour intensive and time consuming. For example, repetitive use of scissors can lead to user fatigue relatively quickly, particularly given the number of times the user has to articulate the grips of the scissors.

Electric clippers are easier to use, but are still time intensive as the operator has to work their way around the tail in multiple passes in order to fully trim the tail.

These difficulties may cause the person doing the trimming to be selective about which tails of the herd require trimming. Often this means that only the dirtiest tails tend to be selected for trimming.

However, mastitis can be caused by relatively insignificant amounts of bacteria which may be present even on what may be a relatively clean tail. It is preferable, although very impracticable to trim the tails of most if not all cows, rather than just the dirtiest.

One apparatus that provides a more expedient way of trimming cow tails is the cutting device disclosed in the present applicant's PCT Publication No. WO2010/085157. This discloses a cutting device that utilises a plurality of circular cutting blades, driven by a portable power tool such as a drill. The tail is simply passed through the centre of the blades. This arrangement generally means that fewer passes are required to trim the tail.

However, the movement transfer mechanism deployed in the cutting device to convert the rotational movement of the power tool into the rotational movement of the cutting blades involved a relatively complex arrangement of gears, or alternatively, a conrod.

In practice, the movement transfer mechanism is relatively difficult to maintain, requiring lubricant on the moving parts of the mechanism. Because of the large contact areas of the driving mechanism due to the gears, there is relatively high amount of friction. This is a greater drain on the battery of the power tool that drives the cutting device.

Furthermore, because of the arrangement of gears and conrod it is also difficult to assemble. This adds to the cost of manufacture of the cutting device.

It is an object of the present invention to address the foregoing problems or at least to provide the public with a useful choice.

German Patent Application No. DE 25 08 784 discloses a cutting device according to the pre-characterizing portion of appended independent claim 1.

Throughout this specification, the word "comprise", or variations thereof such as "comprises" or "comprising", will be understood to imply the inclusion of a stated element, integer or step, or group of elements integers or steps, but not the exclusion of any other element, integer or step, or group of elements, integers or steps.

Further aspects and advantages of the present invention will become apparent from the ensuing description which is given by way of example only.

### DISCLOSURE OF THE INVENTION

According to one aspect of the present invention, there is provided a cutting device for use with a portable power tool including a driving means, wherein the cutting device includes a working element,
a movement transfer mechanism linked to the working element, the movement transfer mechanism including:
a movement transfer block,
a drive shaft configured to engage with a driving means, and wherein the shaft includes a head with an offset pin configured to engage with the movement transfer block,
a linking arm, wherein the linking arm has a first end linked to the working element, and a second end configured to engage with the movement transfer block,
wherein the movement transfer block includes a first aperture or recess substantially inline with the linking arm of the working element and configured to slideably receive the second end of the linking arm, and a second aperture or recess substantially inline with, and configured to slideably receive, the pin of the head of the drive shaft, with the first and second apertures of the movement transfer block being substantially perpendicular to each other,
characterised in that the working element is a cutting assembly having at least a cylindrical inner blade (6) and a cylindrical outer blade arranged concentrically inside each other.

According to one aspect of the present invention, there is provided a portable power tool, the tool including a driving means and a cutting device as described above.

According to another aspect of the present invention there is provided a method of using a portable power tool substantially as described above,
the method characterised by the steps of
a) activating the driving means such the drive shaft rotates, thereby causing translation of the rotational motion of the drive shaft into linear or rotational movement of the working element via the movement transfer mechanism; and
b) passing the working element over a surface to be worked.

The present invention provides a simple and easily assembled movement transfer mechanism for a portable power tool such as a cutting device, where the movement transfer mechanism includes a block or cube configured to receive the drive shaft of the power tool and the linking arm to the working element (which may be a cutting blade) of the tool. Rotation of the drive shaft causes reciprocal movement of the linking arm, and therefore movement of the working element, in the form of a cutting assembly having a cylindrical inner blade and a cylindrical outer blade, with which the linking arm engages.

A portable power tool should be understood to mean any power tool which is portable and uses moving working elements. For example, the power tool may be an orbital sander or cordless drill.

In preferred embodiments of the present invention, the power tool is a cutting device and reference as such shall now be made throughout the remainder of the present specification. However, a person skilled in the art will appreciate that the use of the present invention is not meant to be limiting and other applications for the invention are readily envisaged.

The cutting device includes a cutting assembly having at least a cylindrical inner blade and a cylindrical outer blade arranged concentrically inside each other. The blades are therefore configured with a passage through their centres.

It will be appreciated that the passage encompasses the surface to be worked, which in preferred embodiments of the invention is the tail of a cow.

However, this is not meant to be limiting and the configuration of the blades, and indeed the working elements will depend on the requirements of the user and the surfaces to be worked.

Preferably, the blades are configured with teeth about their upper circumferences.

Preferably, the inner blade is fixed relative to the outer blade, such that the outer blades rotates about the inner blade.

This is preferred as the interior portion of the inner blade defines the passage and thus the surface of the blades that may come into contact with the tail to be trimmed. The arrangement of the blades means the cutting surfaces are where the teeth of the outer blade passes over the teeth of the inner blade. Arranging the blades in this way means that there is less risk of injuring the animal when using the present invention.

The cutting device includes a drive shaft linked or configured to be linked to a driving means.

In preferred embodiments of the present invention, the cutting device has an independent driving means in the form of a cordless drill or the like, such as those typically manufactured by Ryobi™, Black & Decker™ and Makita™. These tools have a motor connected to the driving means. However, this is not meant to be limiting and cordless drills produced by other manufacturers may be used with the present invention.

An advantage of using a cordless drill is that its motor has an internal power source in the form of a battery, and therefore does not require any electrical lines to a separate power source.

In preferred embodiments of the present invention, the drive shaft engages with the chuck of the cordless drill. Thus, the actuation of the drill causes rotation of the drive shaft.

However, it is not beyond the scope of the present invention that the cutting device includes an internal driving means such as a motor or the like integrally linked to the drive shaft (although a source of power, such as a battery will also be required and this, together with the motor, adds additional weight to the cutting device).

The movement transfer mechanism should be understood to mean a mechanism which translates the motion of the drive shaft of the present invention into movement of the working element.

The movement transfer mechanism of the present invention includes the drive shaft as described above, a linking arm having a first end and a second end, and a movement transfer block.

The linking arm should be understood to mean the portion of the movement transfer mechanism that engages with at least one of the working elements with which the invention is to be used.

In preferred embodiments of the present invention, the outer blade of the cutting assembly engages with the linking arm, which in turn engages with the movement transfer block.

In preferred embodiments of the present invention, the outer blade includes a rim about its non-cutting end. This assists in locating the blade assembly within the cutting device.

The linking arm includes a first end configured to engage with an aperture or recess in the rim of the outer blade (or with whatever working element is to be used). The first end may be in the form of a peg or the like.

It should be appreciated that in preferred embodiments of the present invention, the peg is not fixed and/or locked in the aperture of the outer blade but instead is able to move slightly within the aperture, but without becoming disengaged from the blade. This helps compensate for the movement of the blade. It will be appreciated that this means the length of the peg and the depth of the aperture need to be dimensioned appropriately.

This arrangement also allows the movement transfer mechanism to be self-aligning, an important advantage of the present invention. The degree of movement allowed by the peg within the blade compensates for blade wear, adjustment or misalignment of the housing and bearings. Effectively, the peg "floats" within the blade.

The movement transfer block should be understood a structure that is configured to engage with both the drive shaft and the linking arm. The block converts the rotational movement of the drive shaft into linear or rotational (depending on the requirements of the user) movement of the linking arm.

In preferred embodiments of the present invention, the block is a cube having six faces. However, this is not meant to be limiting, and a person skilled in the art will appreciate that the block may take a variety of forms depending on the requirements of the user and tool with which the invention is to be used.

For example, the block may be substantially in the form of a sphere. Alternatively, a more rectangular form for the block may be desired, depending on packaging requirements. One consideration that needs to be made for the shape of the block is that it must be of a sufficient size to allow for a suitable working stroke of the cutting blades (or whatever working element is to be used).

The block is configured with a first aperture or recess complementary to the second end of the linking arm.

The block includes a second aperture or recess complementary to the head of the drive shaft.

It should be understood that in many power tools, the orientation of the working elements, such as the cutting blades of the present invention, may be substantially at right angles to the driving mechanism of the power tool. In other tools, the working stroke of the working element is in a direction that is substantially at right angles to the motion of the driving mechanism.

In accordance with the present invention, the first and second apertures are substantially perpendicular to each other. The first aperture is substantially inline with the end of the linking arm and the second aperture is substantially inline with the head of the drive shaft. Thus, it will be understood that arranging the apertures in this way means that the linking arm and drive shaft are substantially at right angles to each other.

In accordance with the present invention, the drive shaft is configured with a head, the head including an offset pin. By this, it should be understood that the elongate orientation of the pin is laterally offset from the elongate orientation of the drive shaft. Therefore, rotation of the drive shaft causes the pin to scribe a circle, the diameter of which is dependent on the degree to which the pin is laterally offset from the drive shaft.

It is the pin of the drive shaft which engages with the second aperture of the block.

The degree to which the pin is offset from the drive shaft may vary according to the requirements of the user. Generally, the greater the extent to which the pin is offset, the larger the working stroke of the cutting blades (or whatever working element is to be used).

Persons skilled in the art will appreciate that the working stroke (the extent to which the blades move) of the cutting blades may also be determined by the degree in which the first and second apertures of the block are laterally separated from each other.

It will be appreciated that as the drive shaft rotates, the pin of the drive shaft causes the rotational movement of the block. This movement is translated into substantially linear movement of the linking arm, thus driving the outer blade relative to the inner blade.

The end of the linking arm and the pin of the drive shaft are not fixed within the recesses of the block. Instead they are free to move deeper into the recesses, depending on their respective positions as the driveshaft, and therefore the block rotates. The block effectively "floats" between the drive shaft and the linking arm.

This is important as no fastening components are required to engage the linking arm to the drive shaft. This minimises lubrication requirements. There may also be some slight lateral movement of the linking arm and pin within the recesses of the block as the block rotates. Such lateral movement would be difficult to compensate for if the linking arm and driveshaft was fixed relative to the block.

Furthermore, this feature of the invention contributes to the self-aligning aspect of the movement transfer mechanism, which as discussed previously, is an important advantage. The "floating" of the block helps to compensate for blade wear, adjustment or misalignment of the housing and bearings.

It will be appreciated that the pin of the drive shaft, the second end of the linking arm, and the depth of the apertures may need to be dimensioned appropriately to allow the "floating" of the block without the linking arm and drive shaft becoming disengaged.

In preferred embodiments of the present invention, the cutting device is provided with a housing to constrain the relative parts of the device.

In use, the user would fit the cutting device including the movement transfer mechanism to a portable power tool, such as a cordless drill. The driveshaft is inserted and tightened into the chuck of the drill. When the drill is activated, the rotation of the drill chuck also rotates the driveshaft. In turn, the movement transfer block rotates, by virtue of the offzset pin of the head of the drive shaft. This rotary movement moves the linking arm in a substantially back and forth movement, driving the cutting blades. The cutting blades can then be passed over the surface to be worked.

The tail of a cow can be passed through the passage defined at the centre of the blades, which as they rotate, trim the hair and any matter detritus from the tail. This can be achieved quickly and easily. Because the cutting surfaces are circular, greater coverage of the tail is achieved with fewer passes, meaning less manual work (and therefore less time as well) required in trimming of cow tails.

It would be appreciated that the present invention has a number of advantages, including:
- providing a quick, easy to use apparatus for trimming excess hair from the tails of animals;
- provides a self-aligning movement transfer mechanism meaning that the cutting device is less likely to be affect by wear of blades and misalignment of the various components of the cutting device;
- is easy to assemble and maintain;
- improves the hygiene of the animal due to reduction of surfaces to which dirt and detritus may accumulate; or
- at the very least, provides the public with a useful choice.

### BRIEF DESCRIPTION OF DRAWINGS

Further aspects of the present invention will become apparent from the following description which is given by way of example only and with reference to the accompanying drawings in which:
Figure 1 is a perspective exploded view of one embodiment of the present invention;
Figure 2a is a top cross-section view of the cutting device illustrated in Figure 1; and
Figure 2b is a closer view of a portion of Figure 2.

### BEST MODES FOR CARRYING OUT THE INVENTION

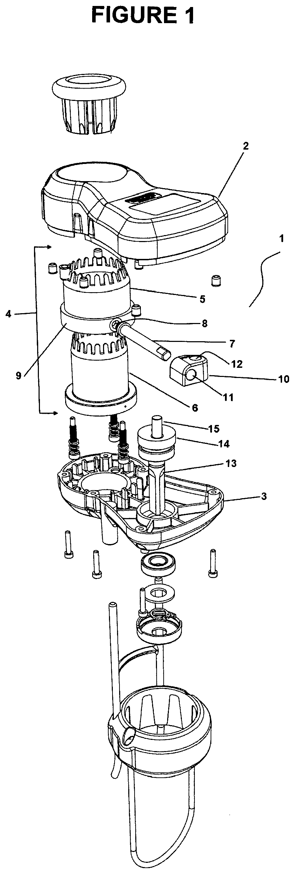

A cutting device (generally indicated by arrow 1) is illustrated in exploded form in Figure 1, and includes two halves of a housing (2, 3), which contains a circular cutting blade assembly (4).

The cylindrical outer blade (5) fits over the cylindrical inner blade (6) of the cutting blade assembly (4) and is provided with a linking arm (7).

The linking arm (7) is configured to be inserted into a suitably dimensioned aperture (8) in the rim (9) of the outer blade (5). The linking arm (7) is also inserted into a movement transfer block (10) via a suitable dimensioned aperture (11).

The block (10) includes a second aperture (12) substantially perpendicular and offset to the first (11), and this engages with the drive shaft (13) of the cutting device (1).

The drive shaft (13) is configured with a rotating head (14), to which an offset pin (15) is provided. It is this pin (15) which is inserted into the movement transfer block (10).

The block (10) effectively "floats" on the linking arm (7) and the pin (15) of the driveshaft (13). No fastening mechanisms are required to hold it in place. This is advantageous as the block (10) compensates not only for the vertical movement of the arm (7) and pin (15) but also some lateral movement as well.

It will be appreciated that as the drive shaft (13), which is configured to be inserted into a chuck of a cordless drill (not shown), is rotated, the head (14) of the drive shaft (13) also rotates.

This rotational movement consequently causes the block (10) to rotate. This translates the movement of the drive shaft (13) into substantially linear movement of the linking arm (7).

Thus, the outer blade (5) rotates about the inner blade (6) of the cutting assembly (4).

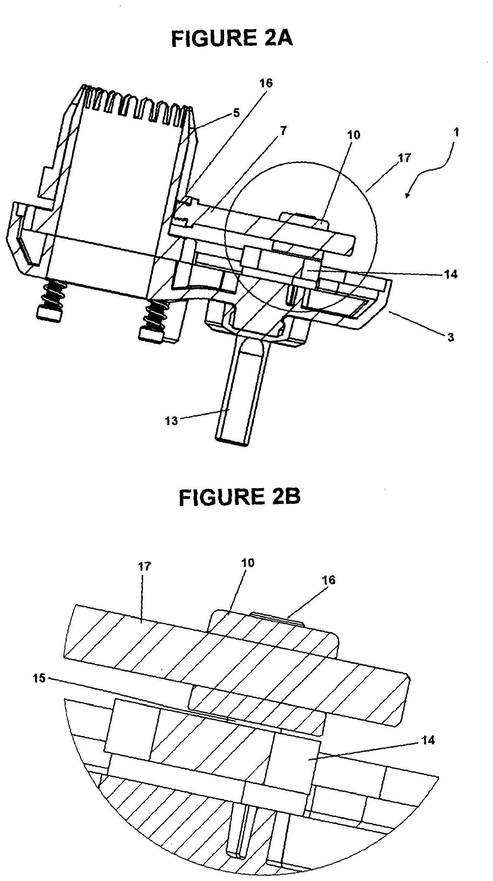

The movement transfer block is better illustrated in Figures 2a and 2b.

Figure 2a is a cross-section top view of the cutting device (1) in an assembled form, although only the lower half (3) of the housing is depicted. It will be seen that the linking arm (7) is orientated substantially at right angles to the drive shaft (13).

The linking arm (7) includes a peg (16) to engage with the outer blade (5). The arm (7) passes back and forth through the movement transfer block (10) as the head (14) of the driveshaft (13) rotates.

Figure 2b is a closer view of the portion of the invention circled (17) in Figure 2a. In this view not only is the linking arm (7) visible but also the offset pin (15) of the head (14) of the driveshaft (not visible).

The top (16) of the pin (15) is just visible. Because the pin (15) is offset, it passes through the block (10) behind the linking arm (7). The pin (15) does not undergo the degree of linear movement of the linking arm (7) and thus does not need to be particularly long, just sufficient sized to be reasonably located within the block (10).

Aspects of the present invention have been described by way of example only and it should be appreciated that modifications and additions may be made thereto without departing from the scope thereof as defined in the appended claims.

## Claims

1. A cutting device for use with a portable power tool including a driving means, wherein the cutting device includes:
a working element (4),
a movement transfer mechanism linking to the working element (4), the movement transfer mechanism including:
a movement transfer block (10),
a drive shaft (13) configured to be linked to a driving means, wherein the drive shaft includes a head (14) with an offset pin (15) configured to engage with the movement transfer block (10),
a linking arm (7), wherein the linking arm has a first end linked to the working element (4) and a second end configured to engage with the movement transfer block (10),
wherein the movement transfer block (10) includes a first aperture or recess (11) substantially inline with the linking arm of the working element (4) and configured to slideably receive the second end of the linking arm, and a second aperture or recess (12) substantially inline with, and configured to slideably receive, the pin (15) of the head (14) of the drive shaft (13), with the first and second apertures (11,12) of the movement transfer block (10) being substantially perpendicular to each other,
**characterised in that** the working element (4) is a cutting assembly having at least a cylindrical inner blade (6) and a cylindrical outer blade (5) arranged concentrically inside each other.

2. The cutting device as claimed in claim 1 wherein the movement transfer block (10) is a cube having six faces.

3. The cutting device as claimed in either claim 1 or claim 2 wherein the first end of the linking arm (7) is configured to be inserted into the working element (4) and/or the second end of the linking arm (7) is not fixed within the second aperture (12).

4. The cutting device as claimed in any one of claims 1 to 3 wherein the movement transfer block (10) converts rotational movement of the shaft (13) into movement of the linking arm (7).

5. The cutting device as claimed in any one of claims 1 to 4, wherein the inner blade (6) is fixed relative to the outer blade (5), such that the outer blade (5) is able to move about the inner blade (6).

6. The cutting device as claimed in any one of claims 1 to 5, wherein the blades (5,6) are configured with teeth about their upper circumferences and/or the outer blade (5) includes a rim about a non-cutting end, and wherein the rim includes a recess for the first end of the linking arm (7).

7. The cutting device as claimed in any one of claims 1 to 6, wherein the first aperture or recess (11) of the movement transfer block (10) is deeper than the length of the second end of the linking arm (7).

8. The cutting device as claimed in any one of claims 1 to 7, wherein the second aperture or recess (12) of the movement transfer block is deeper than the length of the pin (15) of the head (14) of the drive shaft (13).

9. A portable power tool, the tool including a driving means and a cutting device according to any one of claims 1 to 8.

10. The portable power tool as claimed in claim 9, wherein the portable power tool is a cordless drill including a chuck and the driving means is the motor of the cordless drill.

11. The portable power tool as claimed in claim 10 wherein the drive shaft (13) of the movement transfer mechanism is configured to engage with the chuck of the cordless drill.

12. A method of using the portable power tool as claimed in claim 9, wherein the method is **characterised by** the steps of
a) activating the driving means such that the drive shaft (13) rotates, thereby causing translation of the rotational motion of the drive shaft into linear or rotational movement of the working element via the movement transfer mechanism; and
b) passing the working element (4) over a surface to be worked.

13. The method as claimed in claim 12 wherein the cylindrical inner blade (6) and the cylindrical outer blade (5) are arranged concentrically inside each other thereby defining a passage, wherein the passage receives the surface to be worked.

14. The method as claimed in claim 13 wherein the surface to be worked is the tail of a cow.

## Patentansprüche

1. Schneidevorrichtung zur Verwendung mit einem portablen angetriebenen Werkzeug, das ein Antriebsmittel aufweist, wobei die Schneidevorrichtung folgendes aufweist:
ein Arbeitselement (4),
einen Bewegungsübertragungsmechanismus, der eine Verbindung mit dem Arbeitselement (4) vorsieht, wobei der Bewegungsübertragungsmechanismus folgendes aufweist:
einen Bewegungsübertragungsblock (10),
eine Antriebswelle (13), die für eine Verbindung mit einem Antriebsmittel gestaltet ist, wobei die Antriebswelle einen Kopf (14) mit einem versetzten Stift (15) aufweist, der für einen Eingriff mit dem Bewegungsübertragungsblock (10) gestaltet ist,
einen Verbindungsarm (7), wobei der Verbindungsarm ein erstes Ende aufweist, das mit dem Arbeitselement (4) verbunden ist, und ein zweites Ende, das so für einen Eingriff mit dem Bewegungsübertragungsblock (10) gestaltet ist,
wobei der Bewegungsübertragungsblock (10) eine erste Öffnung oder Aussparung (11) aufweist, die im Wesentlichen mit dem Verbindungsarm des Arbeitselements (4) ausgerichtet und so gestaltet ist, dass sie das zweite Ende des Verbindungsarms verschiebbar aufnimmt, und mit einer zweite Öffnung oder Aussparung (12), die im Wesentlichen mit dem Stift (15) des Kopfes (14) der Antriebswelle (13) ausgerichtet und so gestaltet ist, dass sie diesen verschiebbar aufnimmt, wobei die erste und die zweite Öffnung (11, 12) des Bewegungsübertragungsblocks (10) im Wesentlichen senkrecht zueinander sind,
**dadurch gekennzeichnet, dass** das Arbeitselement (4) eine Schneideeinheit ist, die mindestens eine zylindrische innere Klinge (6) und eine zylindrische äußere Klinge (5) aufweist, die ineinander konzentrisch angeordnet sind.

2. Schneidevorrichtung nach Anspruch 1, wobei der Bewegungsübertragungsblock (10) ein Würfel mit sechs Seiten ist.

3. Schneidevorrichtung nach Anspruch 1 oder 2, wobei das erste Ende des Verbindungsarms (7) zum Einführen in das Arbeitselement (4) gestaltet ist, und/oder wobei das zweite Ende des Verbindungsarms (7) nicht in der zweiten Öffnung (12) fixiert ist.

4. Schneidevorrichtung nach einem der Ansprüche 1 bis 3, wobei der Bewegungsübertragungsblock (10) Drehbewegung der Welle (13) in Bewegung des Verbindungsarms (7) überträgt.

5. Schneidevorrichtung nach einem der Ansprüche 1 bis 4, wobei die innere Klinge (6) im Verhältnis zu der äußere Klinge (5) fixiert ist, so dass sich die äußere Klinge (5) um die innere Klinge (6) bewegen kann.

6. Schneidevorrichtung nach einem der Ansprüche 1 bis 5, wobei die Klingen (5, 6) mit Zähnen um ihre oberen Umfänge gestaltet sind, und/oder wobei die äußere Klinge (5) einen Rand um ein nicht schneidendes Ende aufweist, und wobei der Rand eine Aussparung für das erste Ende des Verbindungsarms (7) aufweist.

7. Schneidevorrichtung nach einem der Ansprüche 1 bis 6, wobei die erste Öffnung oder Aussparung (11) des Bewegungsübertragungsblocks (10) tiefer ist als die Länge des zweiten Endes des Verbindungsarms (7).

8. Schneidevorrichtung nach einem der Ansprüche 1 bis 7, wobei die zweite Öffnung oder Aussparung (12) des Bewegungsübertragungsblocks tiefer ist als die Länge des Stifts (15) des Kopfes (14) der Antriebswelle (13).

9. Portables, angetriebenes Werkzeug, wobei das Werkzeug ein Antriebsmittel und eine Schneidevorrichtung nach einem der Ansprüche 1 bis 8 aufweist.

10. Portables, angetriebenes Werkzeug nach Anspruch 9, wobei das portable, angetriebene Werkzeug ein kabelloser Bohrer mit einem Bohrfutter ist, und wobei das Antriebsmittel der Motor des kabellosen Bohrers ist.

11. Portables, angetriebenes Werkzeug nach Anspruch 10, wobei die Antriebswelle (13) des Bewegungsübertragungsmechanismus für einen Eingriff mit dem Bohrfutter des kabellosen Bohrers gestaltet ist.

12. Verfahren zur Verwendung des portablen, angetriebenen Werkzeugs nach Anspruch 9, wobei das Verfahren durch die folgenden Schritte gekennzeichnet ist:
a) Aktivieren des Antriebsmittels, so dass sich die Antriebswelle (13) dreht, wodurch über den Bewegungsübertragungsmechanismus eine Umsetzung der Drehbewegung der Antriebswelle in lineare oder Drehbewegung des Arbeitselements bewirkt wird; und
b) Führen des Arbeitselements (4) über eine zu bearbeitende Oberfläche.

13. Verfahren nach Anspruch 12, wobei die zylindrische innere Klinge (6) und die zylindrische äußere Klinge (5) konzentrisch ineinander angeordnet sind, wodurch ein Durchgang definiert wird, wobei der Durchgang die zu bearbeitende Oberfläche aufnimmt.

14. Verfahren nach Anspruch 13, wobei es sich bei der zu bearbeitenden Oberfläche um den Schwanz eines Rinds handelt.

## Revendications

1. Dispositif de coupe destiné à être utilisé avec un outil électrique portatif comprenant un moyen d'entraînement, le dispositif de coupe comprenant :
un élément de travail (4),
un mécanisme de transfert de mouvement reliant l'élément de travail (4), le mécanisme de transfert de mouvement comprenant :
un bloc de transfert de mouvement (10),
un arbre d'entraînement (13) conçu pour être relié à un moyen d'entraînement, l'arbre d'entraînement comprenant une tête (14) avec une broche décalée (15) conçue pour venir en prise avec le bloc de transfert de mouvement (10),
un bras de liaison (7), le bras de liaison ayant une première extrémité reliée à l'élément de travail (4) et une seconde extrémité conçue pour venir en prise avec le bloc de transfert de mouvement (10),
le bloc de transfert de mouvement (10) comprenant une première ouverture ou évidement (11) sensiblement en ligne avec le bras de liaison de l'élément de travail (4) et conçue pour recevoir de manière coulissante la seconde extrémité du bras de liaison, et une seconde ouverture ou évidement (12) sensiblement en ligne avec, et conçue pour recevoir de manière coulissante, la broche (15) de la tête (14) de l'arbre d'entraînement (13), les première et seconde ouvertures (11, 12) du bloc de transfert de mouvement (10) étant sensiblement perpendiculaires entre elles,
**caractérisé en ce que** l'élément de travail (4) est un ensemble de coupe ayant au moins une lame intérieure cylindrique (6) et une lame extérieure cylindrique (5) disposées concentriquement l'une dans l'autre.

2. Dispositif de coupe selon la revendication 1, le bloc de transfert de mouvement (10) étant un cube ayant six faces.

3. Dispositif de coupe selon la revendication 1 ou 2, la première extrémité du bras de liaison (7) étant conçue pour être insérée dans l'élément de travail (4) et/ou la seconde extrémité du bras de liaison (7) n'étant pas fixée dans la seconde ouverture (12).

4. Dispositif de coupe selon l'une quelconque des revendications 1 à 3, le bloc de transfert de mouvement (10) convertissant le mouvement de rotation de l'arbre (13) en mouvement du bras de liaison (7).

5. Dispositif de coupe selon l'une quelconque des revendications 1 à 4, la lame intérieure (6) étant fixée par rapport à la lame extérieure (5), de sorte que la lame extérieure (5) puisse se déplacer autour de la lame intérieure (6).

6. Dispositif de coupe selon l'une quelconque des revendications 1 à 5, les lames (5, 6) étant conçues avec des dents autour de leurs circonférences supérieures et/ou la lame extérieure (5) comprenant un bord autour d'une extrémité non coupante, et le bord comprenant un évidement pour la première extrémité du bras de liaison (7).

7. Dispositif de coupe selon l'une quelconque des revendications 1 à 6, la première ouverture ou évidement (11) du bloc de transfert de mouvement (10) étant plus profonde que la longueur de la seconde extrémité du bras de liaison (7).

8. Dispositif de coupe selon l'une quelconque des revendications 1 à 7, la seconde ouverture ou évidement (12) du bloc de transfert de mouvement étant plus profond que la longueur de la broche (15) de la tête (14) de l'arbre d'entraînement (13).

9. Outil motorisé portatif, l'outil comprenant un moyen d'entraînement et un dispositif de coupe selon l'une quelconque des revendications 1 à 8.

10. Outil motorisé portatif selon la revendication 9, l'outil motorisé portatif étant une perceuse sans fil comprenant un mandrin et le moyen d'entraînement étant le moteur de la perceuse sans fil.

11. Outil motorisé portatif selon la revendication 10, l'arbre d'entraînement (13) du mécanisme de transfert de mouvement étant conçu pour venir en prise avec le mandrin de la perceuse sans fil.

12. Procédé d'utilisation de l'outil motorisé portatif selon la revendication 9, le procédé étant **caractérisé par** les étapes consistant à
a) activer le moyen d'entraînement de sorte que l'arbre d'entraînement (13) tourne, entraînant ainsi la translation du mouvement de rotation de l'arbre d'entraînement en un mouvement linéaire ou rotatif de l'élément de travail par l'intermédiaire du mécanisme de transfert de mouvement ; et
b) faire passer l'élément de travail (4) sur une surface à travailler.

13. Procédé selon la revendication 12, la lame intérieure cylindrique (6) et la lame extérieure cylindrique (5) étant disposées concentriquement l'une dans l'autre, définissant ainsi un passage, le passage recevant la surface à travailler.

14. Procédé selon la revendication 13, la surface à travailler étant la queue d'une vache.
